# EUROPÄISCHE PATENTSCHRIFT

(11) **EP 1 335 136 B1**
(45) Veröffentlichungstag und Bekanntmachung des Hinweises auf die Patenterteilung: **05.01.2005**
(21) Anmeldenummer: 03000374.3
(22) Anmeldetag: 10.01.2003
(51) Int. Cl.: F04D 29/68, F04D 29/54, F04D 27/02, F01D 5/14

(54) **Gasturbine mit einem Verdichterbereich mit einer Vorrichtung zur Beeinflussung der Strömung entlang der Wand des Stömungskanals des Verdichters**
Gasturbine with a compressor having a flow guiding system along the walls of the flow canal of the compressor
Turbine à gaz ayant un compresseur muni d'un système de guidage du flux traversant le canal d'écoulement du compresseur le long des parois de ce canal

(30) Priorität: 08.02.2002 DE 10205363
(43) Veröffentlichungstag der Anmeldung: 13.08.2003
(73) Patentinhaber: Rolls-Royce Deutschland Ltd & Co KG, 15827 Dahlewitz (DE)
(72) Erfinder: Gümmer, Volker, 15831 Mahlow (DE)
(74) Vertreter: Weber, Joachim, Dr.

(56) Entgegenhaltungen:
- FR-A- 2 669 687
- FR-A- 2 794 817
- GB-A- 2 363 167
- US-A- 4 781 530
- US-B1- 6 302 643

## Beschreibung

Die Erfindung bezieht sich auf eine Gasturbine gemäß dem Oberbegriff des Hauptanspruchs.

Im Einzelnen bezieht sich die Erfindung auf eine Gasturbine mit einem Verdichterbereich, welcher eine mit Rotorschaufeln versehene Rotorwelle und ein mit Statorschaufeln versehenes Gehäuse aufweist, wobei die einander zugeordneten Rotorschaufeln und Statorschaufeln unter Bildung eines axialen Zwischenraums von einander beabstandet sind. Erfindungsgemäß ist der Begriff Verdichterbereich so zu verstehen, dass er Teil eines Fans oder eines Kompressors sein kann.

Die aerodynamische Belastung von Fans und Kompressoren von Flugtriebwerken und stationären Gasturbinen ist durch die Notwendigkeit einer ausreichenden Strömungsstabilität begrenzt. Die Belastung der einzelnen Verdichterstufen lässt sich jedoch erhöhen, wenn spezielle Maßnahmen ergriffen werden, um einen Strömungsabriss oder ein Pumpen zu vermeiden.

Die vorliegende Erfindung bezieht sich auf die Wandungsausgestaltung sowohl der Rotorwelle als auch des Gehäuses in dem beschriebenen Verdichterbereich.

Die vorliegende Erfindung bezieht sich dabei sowohl auf Verdichterbereiche mit einem axialen als auch halbaxialen oder radialen Verlauf.

Erfindungsgemäß sind einer oder mehrere Verdichterbereiche vorgesehen, die jeweils eine Rotor-Stator-Konfiguration oder eine Stator-Rotor-Konfiguration umfassen. Dabei wird der Rotor durch eine Reihe von Rotorblättern gebildet, die auf einer Rotorwelle befestigt sind, während der Stator durch eine Anzahl von Statorschaufeln gebildet wird, die an einem Gehäuse befestigt sind. Insofern entsprechen sowohl der Rotor als auch der Stator den aus dem Stand der Technik bekannten Ausgestaltungen.

Erfindungsgemäß können die Statorschaufeln auch in Form von Eintrittsleitschaufeln ausgebildet sein.

Die Charakteristik des Druckverhältnisses und des Massendurchsatzes, die ein Teil- oder Gesamtverdichter bei einer konstanten Rotationsgeschwindigkeit zeigt, besitzt über einen größeren Durchsatzbereich einen negativen Gradienten. Bei geringen Massendurchsätzen verläuft die Charakteristik zunehmend flacher und der Gradient wechselt sein Vorzeichen von negativ zu positiv. Dies ist üblicherweise der Punkt, an welchem ein Verdichter instabil wird und entweder ins Stadium der rotierenden Strömungsabrisse oder in ein Pumpen übergeht. Diese beiden Betriebszustände begrenzen den Betriebsbereich des Verdichters und führen gegebenenfalls zu Beschädigungen des Verdichters oder der gesamten Gasturbine.

Aus dem Stand der Technik wurden unterschiedliche Lösungen vorgeschlagen, um die oben genannten Nachteile zu vermeiden:

Zunächst ist es bekannt, Schlitze, Nuten, Bohrungen oder Kanäle in der Gehäusewandung auszubilden, welche sich teilweise oder ganz im Bereich der Blattenden der Rotorschaufeln befinden.

Eine weitere Maßnahme besteht darin, Schlitze, Nuten, Bohrungen oder Kanäle in der Wandung der Rotorwelle auszubilden, welche sich ganz oder teilweise im Bereich der Statorschaufeln befinden.

Als dritte Maßnahme wurde vorgeschlagen, Mittel zur Abtrennung der gehäusenahen Strömung im Bereich vor oder innerhalb der Bewegungsbahn der Rotorschaufeln vorzusehen, so genannte Separatoren.

Die aus dem Stand der Technik bekannten Maßnahmen sind an einem erheblichen Teil des Bewegungskreises oder Bewegungsbereiches der Rotorschaufeln bzw. Statorschaufeln vorgesehen. Sie sind somit entweder oberhalb des Rotors am Endbereich der Rotorblätter oder unterhalb des Stators am Endbereich der Statorschaufeln vorgesehen. Hieraus ergibt sich eine sehr unstetige Störung der Strömung im Bereich der Radialspalte der Rotorschaufeln bzw. der Statorschaufeln. Hieraus ergibt sich ein nicht unerheblicher Verlust an Wirkungsgrad. Weiterhin ergeben sich mechanische Probleme bei der Fertigung sowie Probleme hinsichtlich der auftretenden Schwingungen. Insgesamt sind sämtliche der bekannten Maßnahmen ausgesprochen kostenintensiv in der Herstellung.

Die GB 2 363 167 A beschreibt einen Ringraum, der sich im Zwischenbereich zwischen einer Statorschaufel und einer Rotorschaufel befindet. In diesem Ringraum sind zur Schwingungsdämpfung einzelne flexible Stäbe gelagert, die sich durch die auftretenden Vibrationen verformen und somit zu einer Vibrationsdämpfung beitragen. Die Stäbe sind vollständig von der Strömung in dem Ringkanal umströmbar, da sie sich in axialer Richtung in dem Ringkanal oder Ringraum erstrecken.

Ein weiterer Axialverdichter ist aus der FR 2 669 687 A vorbekannt. Hierzu ist in dem Bereich, der durch die Laufschaufeln abgedeckt wird, eine Schlitzung des Gehäuses vorgesehen. Diese ist jedoch nicht in dem Zwischenbereich zwischen den Leitschaufeln und den Laufschaufeln ausgebildet, sondern nur im Spitzenbereich der Laufschaufeln. Insofern ist eine andere technische Lösung vorbekannt.

Der Erfindung liegt die Aufgabe zugrunde, eine Gasturbine der eingangs genannten Art zu schaffen, welche bei einfachem Aufbau und kostengünstiger, einfacher Herstellbarkeit ein hohes Maß an Strömungsstabilität unter Vermeidung einer Verschlechterung des Wirkungsgrades aufweist.

Erfindungsgemäß wird die Aufgabe durch die Merkmale des Hauptanspruchs gelöst.

Die Unteransprüche zeigen weitere vorteilhafte Ausgestaltungen der Erfindung.

Das Wirkprinzip von Gehäuse- bzw. Nabenstrukturierungen nach dem Stand der Technik basiert auf einem pulsierenden Ein- und Ausströmmechanismus, der die axiale Überdeckung von Schaufel und der Wandstrukturierung erfordert, während die Erfindung hier eine kontinuierliche aber nah im Wandbereich gut geführte Strömung sicherstellt und so eine bessere Verkonditionierung der jeweiligen Rotor- oder Statorzuströmung vornimmt.

Erfindungsgemäß ist somit vorgesehen, dass im Bereich des axialen Zwischenraums zumindest eine Wandung der Rotorwelle oder des Gehäuses mit einer Anordnung von gegen die Axialrichtung geneigten Stegen versehen ist.

Durch die erfindungsgemäße Ausgestaltung ergibt sich eine Reihe wesentlicher Vorteile.

Zunächst wird erfindungsgemäß ein Weg beschritten, der sich grundsätzlich hinsichtlich seiner Wirkungsweise von den aus dem Stand der Technik bekannten Lösungen unterscheidet.

Im Unterschied zu den bekannten Ausgestaltungen wird die Strömung am freien Ende der Rotorschaufeln bzw. die Strömung am freien Ende der Statorschaufeln von dem mit Stegen versehenen Bereich beeinflusst, welcher sich außerhalb des durch die Rotorschaufeln bzw. Statorschaufeln gebildeten Radialspalts befindet.

Bei der erfindungsgemäß vorgesehenen Ausgestaltung ergibt sich eine richtungsstabilisierende Strömungsführung vor der betreffenden Schaufelreihe. Demgegenüber wirken die aus dem Stand der Technik bekannten Nuten oder Schlitze als Ausnehmungen, welche sich axial mit den jeweiligen Schaufelreihen überlappen und somit aufgrund der starken Wechselwirkung zu einem sehr verlustbehafteten Strömungsverhalten führen.

Demgegenüber erfolgt erfindungsgemäß eine stetige Führung oder Leitung der wandnahen Strömung, die an den freien Enden der Rotorschaufeln bzw. Statorschaufeln die Bildung eines Strömungsabrisses erheblich verzögern und insgesamt ein stabileres Strömungsverhalten ergibt. Die Vorteile der Erfindung treten insbesondere bei Teillast-Betriebsbedingungen hervor, so dass der Wirkungsgrad des Verdichters wie bei einer glatten Ausführung der den Rotorschaufeln oder Statorschaufeln benachbarten Wandung des Gehäuses bzw. der Rotorwelle erhalten bleibt.

Durch die oben genannten Vorteile ergibt sich, dass die Anzahl der Verdichterstufen bei gleichbleibender Leistung um etwa 30%, verglichen mit den aus dem Stand der Technik bekannten Konstruktionen, verringert werden kann. Hieraus ergibt sich eine Gewichtsersparnis von 30% bei einer Kostenersparnis von etwa 20%.

Erfindungsgemäß ist es besonders günstig, wenn die Stege im Wesentlichen parallel zueinander verlaufen. Die Stege können entweder gerade oder gebogen ausgebildet sein.

Die erfindungsgemäße Ausgestaltung ist einzeln oder in Kombination anwendbar. Dies bedeutet, dass die Stege entweder nur in der Wandung der Rotorwelle oder nur in der Wandung des Gehäuses oder in beiden ausgebildet sein können.

Erfindungsgemäß können die Stege über ihre Länge einen konstanten Querschnitt aufweisen, es ist jedoch auch möglich, den Querschnitt der Stege über deren Länge zu ändern. So ist ebenfalls möglich, die radiale Höhe der Stege zwischen 0,5% und 10% der Ringkanalhöhe zu variieren. Alternativ hierzu ist es möglich, die radiale Höhe der Stege zwei- bis achtmal so groß auszubilden, wie der radiale Spalt zwischen der Rotorschaufel und dem Gehäuse bzw. der radiale Spalt zwischen der Statorschaufel und der Rotorwelle. Bezogen auf eine radial von der Maschinenachse ausgehenden Linie kann es vorteilhaft sein, die Seitenflanken der Stege unter einem Winkel ungleich Null auszurichten.

Hinsichtlich der Breite benachbarter Stege kann es besonders günstig sein, wenn diese, in Umfangsrichtung aufsummiert, zwischen 30% und 1% des Umfangs beträgt (Breite des Steges bezogen auf die Breite von Steg plus Stegzwischenraum = 30% - 1%).

Die Anzahl der Stege bzw. die Anzahl der Stegzwischenräume (Taschen) kann bevorzugterweise mindestens doppelt so groß sein wie die Anzahl der zugeordneten, stromab angeordneten Rotorschaufeln bzw. Statorschaufeln des jeweiligen Verdichterbereichs.

Um das Strömungsverhalten zu verbessern, kann es günstig sein, wenn die Stege bzw. Stegzwischenräume zur Axialrichtung der Gasturbine geneigt angeordnet sind.

Die freien Kanten der Stege können entweder abgerundet oder abgeschrägt ausgebildet sein, um ein ungestörtes Abschließen der Strömung sicherzustellen.

Erfindungsgemäß ist es möglich, die Stege entweder durch einen Materialabtrag (Fräsen oder Ähnliches) oder durch einen Materialauftrag (Auftragsschweißen oder Ähnliches) herzustellen. Insofern ist die Erfindung an die unterschiedlichsten Technologien anpassbar.

Im Folgenden wird die Erfindung anhand von Ausführungsbeispielen in Verbindung mit der Zeichnung beschrieben. Dabei zeigt:
- Fig. 1: eine vereinfachte, schematische SeitenSchnittansicht eines erfindungsgemäß ausgestalteten Verdichterbereichs einer Gasturbine,
- Fig. 2: eine vergrößerte Darstellung eines Bereichs von Stegen in einem Gehäuse, die durch Materialabtrag erzeugt wurden,
- Fig. 3: eine Darstellung, analog Fig. 2, mit einer Herstellung der Stege durch Materialauftrag,
- Fig. 4: eine stirnseitige Ansicht eines Ausführungsbeispiels der Stege,
- Fig. 5: eine vereinfachte Seitenansicht der erfindungsgemäßen Stege mit einer Statorschaufel und einer Rotorschaufel, wobei die Stege in einem Gehäuse ausgebildet sind, und
- Fig. 6: eine Ansicht, ähnlich Fig. 5, wobei die Stege in der Rotorwelle ausgebildet sind.

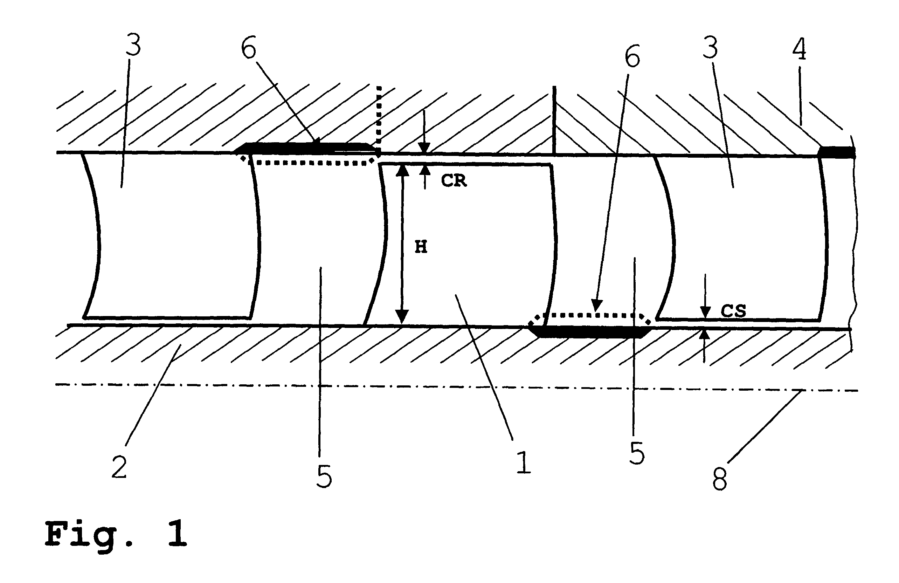

In Fig. 1 ist in schematischer Seitenansicht ein Teilbereich eines erfindungsgemäßen Verdichterbereichs dargestellt. Das Bezugszeichen 8 zeigt eine Drehachse der Gasturbine, um welche eine Rotorwelle 2 drehbar ist, auf welcher eine Vielzahl von Rotorschaufeln 1 befestigt ist. Diese sind umgeben von einem Gehäuse 4, welches mehrere Anordnungen von Statorschaufeln 3 trägt.

Der zwischen dem Gehäuse und der Rotorwelle gebildete freie Abstand ist mit H gekennzeichnet. Der Abstand zwischen den freien Enden der Rotorschaufeln 1 und dem Gehäuse 4 ist mit CR gekennzeichnet, während der Abstand zwischen den freien Enden der Statorschaufeln 3 und der Rotorwelle 2 mit CS gekennzeichnet ist.

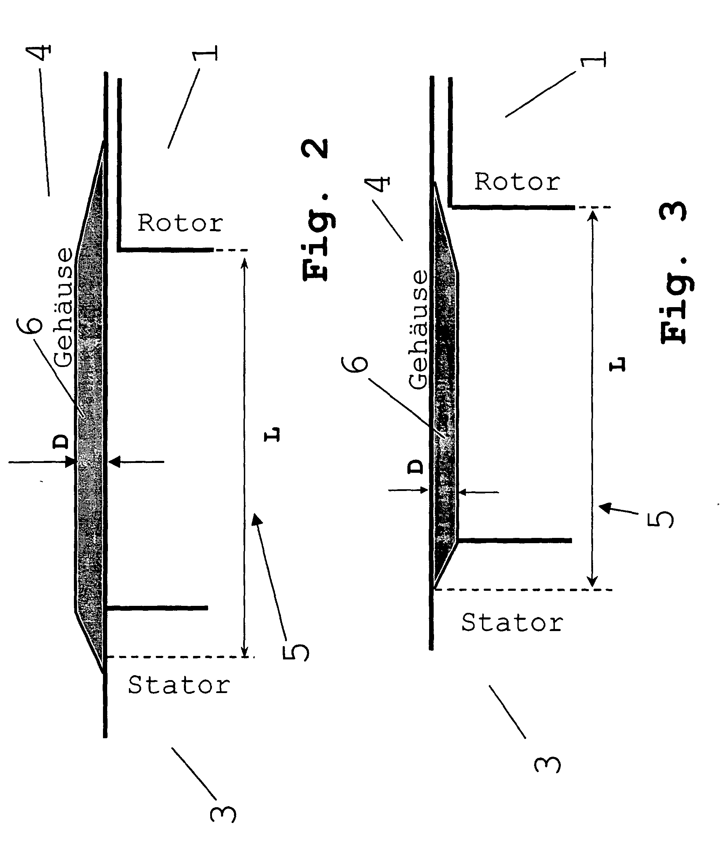

Zwischen den Statorschaufeln 3 und den Rotorschaufeln 1 ist jeweils ein Zwischenraum 5 gebildet, in welchem eine Vielzahl von nachfolgend noch zu beschreibenden Stegen 6 ausgebildet ist. Die Stege 6 können, wie in Fig. 2 gezeigt, durch einen Materialabtrag gebildet sein (beispielsweise durch Fräsen oder Ähnliches). Die Höhe der Stege 6 ist mit D angegeben. Das Bezugszeichen L beschreibt die axiale Länge der Stege 6.

In Fig. 3 ist in einer Abwandlung zu der Darstellung der Fig. 2 die Ausbildung der Stege 6 durch Materialauftrag (Auftragsschweißen oder Ähnliches) gezeigt.

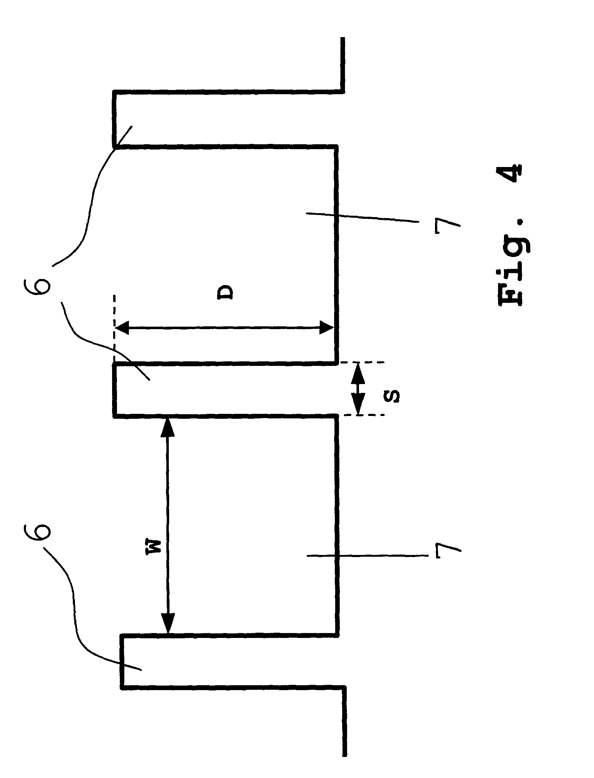

Die Fig. 4 zeigt eine axiale stirnseitige Ansicht benachbarter Stege 6, zwischen denen jeweils ein Stegzwischenraum (Tasche, Nut) 7 ausgebildet ist. Die Breite der Stege 6 in Umfangsrichtung ist mit S angegeben, während die Breite der Stegzwischenräume mit W bezeichnet ist. Fig. 4 zeigt wiederum die Höhe D der Stege 6.

Die radiale Höhe der Stege 6 ist in axialer Richtung entweder konstant oder variabel, beispielsweise innerhalb eines Bereiches von 0,5% bis 10% der Ringkanalhöhe. Es ist auch möglich, die Tiefe D zumindest doppelt so groß auszubilden, wie die Radialspalthöhe CR bzw. CS der jeweiligen stromab befindlichen Anordnung von Rotorschaufeln 1 bzw. Statorschaufeln 2. Es ergibt sich somit ein Verhältnis von D/CR = 2 bis 8 bzw. von D/CS = 2 bis 8.

Die aufsummierte Materialdicke der Stege 6, welche Strömungsführungen bilden, beträgt höchstens 30% des Gesamtumfangswertes, d.h. S/(W+S)=30%-1%.

Die Anzahl der Stege 6 bzw. der Stegzwischenräume 7 ist zumindest zweimal so groß, wie die Anzahl der Rotorschaufeln bzw. Statorschaufeln in der stromabwärts angeordneten Schaufelreihe.

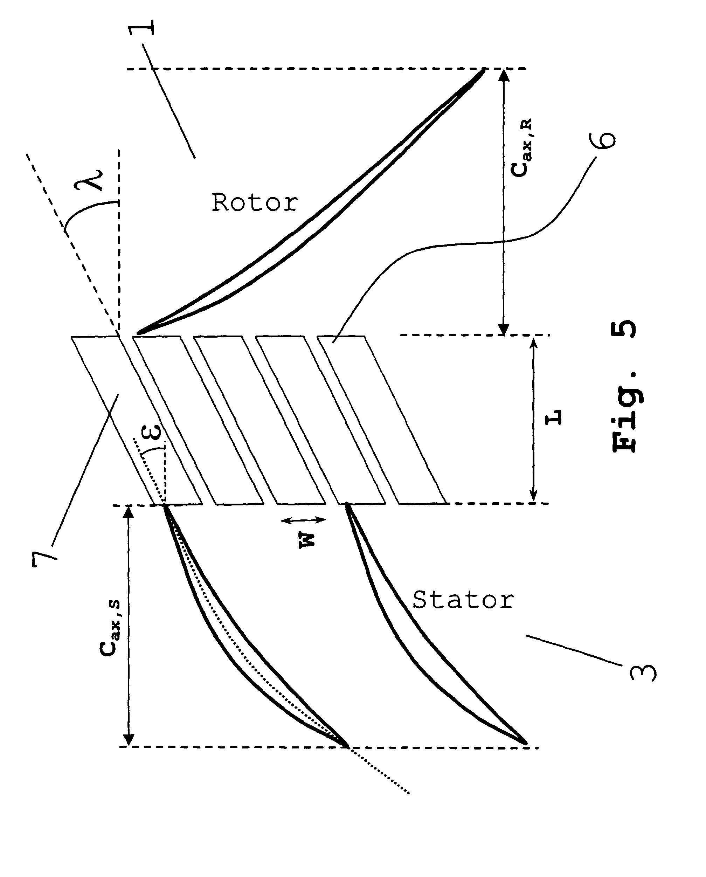

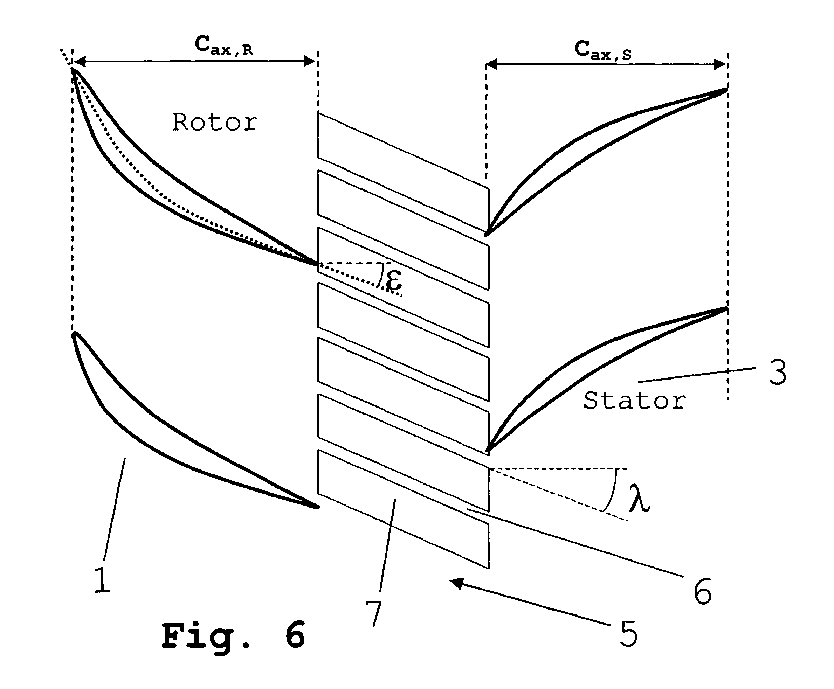

Die Fig. 5 und 6 zeigen unterschiedliche Ausgestaltungen, wobei die Fig. 5 die Ausbildung der Stege 6 am Gehäuse 4 zeigt, während die Fig. 6 die Ausbildung der Stege 6 an der Rotorwelle 2 zeigt.

Die Fig. 5 zeigt eine Ausgestaltung, bei welcher die Stege im Bereich der Hinterkante der Statorschaufeln 3 beginnen, bei maximal 30% der axialen Sehnenlänge der Statorschaufeln. Die Stege erstrecken sich lediglich bis zur Vorderkante der nachfolgenden Rotorschaufeln 1. Die Schrägstellung der Stege 6 bzw. der Stegzwischenräume 7 zur Axialrichtung (Winkel λ) entspricht dem Abströmwinkel ε, wobei ein Abweichungsbereich von ± 25° möglich ist. Der Winkel ε bezeichnet auch den Tangentenwinkel der Krümmungslinie der Statorschaufel 3.

Bei der Darstellung der Fig. 6 ist erkennbar, dass die Stege 6 bzw. die Stegzwischenräume 7 im Bereich der Hinterkante der Rotorschaufel 1 beginnen. Die Stege 6 bzw. Stegzwischenräume 7 erstrecken sich lediglich bis zur Vorderkante der nachfolgenden Statorschaufeln 3. Die Neigung der Stege 6 bzw. der Stegzwischenräume 7 zur Axialrichtung (Winkel λ) entspricht dem Abströmwinkel ε, welcher wiederum der Tangentenwinkel zu dem Profil der Rotorschaufel 1 ist. Auch hier ist ein Bereich von ± 25° möglich.

### Bezugszeichenliste

- 1: Rotorschaufel
- 2: Rotorwelle
- 3: Statorschaufel
- 4: Gehäuse
- 5: Zwischenraum
- 6: Steg
- 7: Stegzwischenräume (Tasche, Nut)
- 8: Drehachse
- D: Steghöhe
- W: Stegzwischenraumbreite
- CR: Radialspalthöhe Rotor
- CS: Radialspalthöhe Stator
- S: Stegbreite
- H: Ringkanalhöhe
- L: Steg-Länge

## Patentansprüche

1. Gasturbine mit einem Verdichterbereich, welcher eine mit Rotorschaufeln (1) versehene Rotorwelle (2) und ein mit Statorschaufeln (3) versehenes Gehäuse (4) aufweist, wobei die einander zugeordneten Rotorschaufeln (1) und Statorschaufeln (3) unter Bildung eines axialen Zwischenraums (5) von einander beabstandet sind,
**dadurch gekennzeichnet, dass**
in dem axialen Zwischenraum (5) zumindest eine Wandung der Rotorwelle (2) und/oder des Gehäuses (4) mit einer Anordnung von gegen die Axialrichtung geneigten Stegen (6) versehen ist, wobei die Stege durch Materialabtrag der Wandung oder durch Materialauftrag auf die Wandung gebildet sind.

2. Gasturbine nach Anspruch 1,
**dadurch gekennzeichnet, dass**
die Stege (6) im Wesentlichen parallel zueinander verlaufen.

3. Gasturbine nach Anspruch 1 oder 2,
**dadurch gekennzeichnet, dass**
die Stege (6) im Wesentlichen gerade ausgebildet sind.

4. Gasturbine nach einem der Ansprüche 1 bis 2,
**dadurch gekennzeichnet, dass**
die Stege (6) im Wesentlichen gebogen ausgebildet sind.

5. Gasturbine nach einem der Ansprüche 1 bis 4,
**dadurch gekennzeichnet, dass**
die Stege (6) nur in der Wandung der Rotorwelle (2) ausgebildet sind.

6. Gasturbine nach einem der Ansprüche 1 bis 4,
**dadurch gekennzeichnet, dass**
die Stege (6) nur in der Wandung des Gehäuses (4) ausgebildet sind.

7. Gasturbine nach einem der Ansprüche 1 bis 4,
**dadurch gekennzeichnet, dass**
die Stege (6) sowohl in der Wandung der Rotorwelle (2) als auch in der Wandung des Gehäuses (4) ausgebildet sind.

8. Gasturbine nach einem der Ansprüche 1 bis 7,
**dadurch gekennzeichnet, dass**
die Stege (6) über ihre Länge einen konstanten Querschnitt aufweisen.

9. Gasturbine nach einem der Ansprüche 1 bis 7,
**dadurch gekennzeichnet, dass**
die Stege (6) über ihre Länge einen sich ändernden Querschnitt aufweisen.

10. Gasturbine nach Anspruch 9,
**dadurch gekennzeichnet, dass**
die radiale Höhe (D) des Steges (6) zwischen 0,5% bis 10% der Ringkanalhöhe (H) beträgt und entlang seiner Länge variabel ist.

11. Gasturbine nach einem der Ansprüche 9 oder 10,
**dadurch gekennzeichnet, dass**
die radiale Höhe (D) des Steges (6) zwei- bis achtmal so groß ist, wie der radiale Spalt (CR) zwischen der Rotorschaufel (1) und dem Gehäuse (4) bzw. der radiale Spalt (CS) zwischen der Statorschaufel (3) und der Rotorwelle (2).

12. Gasturbine nach einem der Ansprüche 1 bis 11,
**dadurch gekennzeichnet, dass**
die Stegbreite (S) der Stege (6) - in Umfangsrichtung betrachtet - 30% bis 1% der Summe aus Stegzwischenraumbreite (W) und der Stegbreite (S) beträgt.

13. Gasturbine nach Anspruch 12,
**dadurch gekennzeichnet, dass**
-die Zahl der Stege (6) mindestens doppelt so groß ist, wie die Zahl der zugeordneten, stromab angeordneten Rotorschaufeln (1) bzw. Statorschaufeln (3).

14. Gasturbine nach einem der Ansprüche 1 bis 13,
**dadurch gekennzeichnet, dass**
die Stege (6) bzw. die Stegzwischenräume (7) zur Axialrichtung geneigt angeordnet sind.

15. Gasturbine nach einem der Ansprüche 12 bis 14,
**dadurch gekennzeichnet, dass**
die freien Kanten der Stege (6) abgerundet ausgebildet sind.

16. Gasturbine nach einem der Ansprüche 12 bis 14,
**dadurch gekennzeichnet, dass**
die freien Kanten der Stege (6) abgeschrägt ausgebildet sind.

17. Gasturbine nach einem der Ansprüche 1 bis 16,
**dadurch gekennzeichnet, dass**
die Seitenflanken der Stege (6) zu einer radial von der Maschinenachse ausgehenden Linie parallel ausgerichtet sind.

18. Gasturbine nach einem der Ansprüche 1 bis 16,
**dadurch gekennzeichnet, dass**
die Seitenflächen der Stege (6) zu einer radial von der Maschinenachse ausgehenden Linie unter einem Winkel verschieden von Null ausgerichtet sind.

19. Gasturbine nach einem der Ansprüche 1 bis 18,
**dadurch gekennzeichnet, dass**
die Stege (6) durch Materialabtrag ausgebildet sind.

20. Gasturbine nach einem der Ansprüche 1 bis 18,
**dadurch gekennzeichnet, dass**
die Stege (6) durch Materialauftrag ausgebildet sind.

## Claims

1. Gas turbine with a compressor area which has a rotor shaft (2) provided with rotor blades (1) and a casing (4) provided with stator vanes (3), with the related rotor blades (1) and stator vanes (3) forming an axial clearance (5) between one another,
**characterized in that**
in the area of the axial clearance (5) at least one wall of the rotor shaft (2) and/or of the casing (4) is provided with an arrangement of fins (6) inclined against the axial direction, with the fins being produced by material removal from the wall or by material deposition onto the wall.

2. Gas turbine in accordance with Claim 1,
**characterized in that**
the fins (6) are essentially parallel to each other.

3. Gas turbine in accordance with Claim 1 or 2,
**characterized in that**
the fins (6) are essentially straight.

4. Gas turbine in accordance with one of the Claims 1 to 2,
**characterized in that**
the fins (6) are essentially curved.

5. Gas turbine in accordance with one of the Claims 1 to 4,
**characterized in that**
the fins (6) are provided in the wall of the rotor shaft (2) only.

6. Gas turbine in accordance with one of the Claims 1 to 4,
**characterized in that**
the fins (6) are provided in the wall of the casing (4) only.

7. Gas turbine in accordance with one of the Claims 1 to 4,
**characterized in that**
the fins (6) are provided in both, the wall of the rotor shaft (2) and the wall of the casing (4).

8. Gas turbine in accordance with one of the Claims 1 to 7,
**characterized in that**
the fins (6) feature a constant cross-section over their length.

9. Gas turbine in accordance with one of the Claims 1 to 7,
**characterized in that**
the fins (6) feature a varying cross-section over their length.

10. Gas turbine in accordance with Claim 9,
**characterized in that**
the radial height (D) of the fin (6) is 0.5 percent to 10 percent of the annulus duct height (H) and is variable along its length.

11. Gas turbine in accordance with one of the Claims 9 or 10,
**characterized in that**
the radial height (D) of the fin (6) is two to eight times larger than the radial gap (CR) between he rotor blade (1) and the casing (4) or the radial gap (CS) between the stator vane (3) and the rotor shaft (2), respectively.

12. Gas turbine in accordance with one of the Claims 1 to 11,
**characterized in that**
the fin width (S) of the fins (6) - as viewed in the circumferential direction - is 30 to 1 percent of the sum of fin interspace width (W) and fin width (S).

13. Gas turbine in accordance with Claim 12,
**characterized in that**
the number of fins (6) is at least twice the number of related, downstream rotor blades (1) or stator vanes (3), respectively.

14. Gas turbine in accordance with one of the Claims 1 to 13,
**characterized in that**
the fins (6) or the fin interspaces (7), respectively, are inclined relative to the axial direction.

15. Gas turbine in accordance with one of the Claims 12 to 14,
**characterized in that**
the free edges of the fins (6) are rounded.

16. Gas turbine in accordance with one of the Claims 12 to 14,
**characterized in that**
the free edges of the fins (6) are chamfered.

17. Gas turbine in accordance with one of the Claims 1 to 16,
**characterized in that**
the side flanks of the fins (6) are orientated in parallel with a line extending radially from the machine axis.

18. Gas turbine in accordance with one of the Claims 1 to 16,
**characterized in that**
the side flanks of the fins (6) are orientated at an angle different from zero relative to a line extending radially from the machine axis.

19. Gas turbine in accordance with one of the Claims 1 to 18,
**characterized in that**
the fins (6) are produced by material removal.

20. Gas turbine in accordance with one of the Claims 1 to 18,
**characterized in that**
the fins (6) are produced by material deposition.

## Revendications

1. Turbine à gaz avec une zone de compresseur présentant un arbre de rotor (2) muni d'aubes de rotor (1) et un carter (4) muni d'aubes de stator (3), les aubes de rotor (1) et de stator (3) conjuguées étant distantes les unes des autres en formant un espace intermédiaire axial,
**caractérisée en ce que**
dans la zone de l'espace intermédiaire axial (5), au moins une paroi de l'arbre de rotor (2) et/ou du carter (4) est munie d'un arrangement de nervures (6) inclinées par rapport au sens axial, les nervures étant réalisées, soit par enlèvement de matière de la paroi, soit par apport de matière sur la paroi.

2. Turbine à gaz selon la revendication 1,
**caractérisé en ce que**
les nervures (6) sont essentiellement parallèles entre elles.

3. Turbine à gaz selon la revendication 1 ou 2,
**caractérisé en ce que**
les nervures (6) sont essentiellement rectilignes.

4. Turbine à gaz selon une des revendications 1 à 2,
**caractérisé en ce que**
les nervures (6) sont essentiellement courbées.

5. Turbine à gaz selon une des revendications 1 à 4,
**caractérisé en ce que**
les nervures (6) sont formées uniquement dans la paroi de l'arbre de rotor (2).

6. Turbine à gaz selon une des revendications 1 à 4,
**caractérisé en ce que**
les nervures (6) sont formées uniquement dans la paroi du carter (4).

7. Turbine à gaz selon une des revendications 1 à 4,
**caractérisé en ce que**
les nervures (6) sont formées non seulement dans la paroi de l'arbre de rotor (2), mais aussi dans la paroi du carter (4).

8. Turbine à gaz selon une des revendications 1 à 7,
**caractérisé en ce que**
les nervures (6) présentent une section constante sur toute leur longueur.

9. Turbine à gaz selon une des revendications 1 à 7,
**caractérisé en ce que**
les nervures (6) varient en section sur leur longueur.

10. Turbine à gaz selon la revendication 9,
**caractérisé en ce que**
la hauteur radiale (D) de la nervure (6) s'élève à 0,5 % à 10 % de la hauteur du canal annulaire (H) et est variable le long de sa longueur.

11. Turbine à gaz selon une des revendications 9 ou 10,
**caractérisé en ce que**
la hauteur radiale (D) de la nervure (6) est deux à huit fois la hauteur du jeu radial (CR) entre l'aube de rotor (1) et le carter (4) ou la hauteur du jeu radial (CS) entre l'aube de stator (3) et l'arbre de rotor (2).

12. Turbine à gaz selon une des revendications 1 à 11,
**caractérisé en ce que**
la largeur (S) des nervures (6) dans le sens circonférentiel s'élève à 30 % à 1 % de la somme de la largeur des espaces entre nervures (W) et de la largeur des nervures (S).

13. Turbine à gaz selon la revendication 12,
**caractérisé en ce que**
le nombre des nervures (6) est du moins égal au double de celui des aubes de rotor (1) ou de stator (3) conjuguées et disposées en aval.

14. Turbine à gaz selon une des revendications 1 à 13,
**caractérisé en ce que**
les nervures (6) ou les espaces entre nervures (7) sont inclinées par rapport au sens axial.

15. Turbine à gaz selon une des revendications 12 à 14,
**caractérisé en ce que**
les arêtes libres des nervures (6) sont arrondies.

16. Turbine à gaz selon une des revendications 12 à 14,
**caractérisé en ce que**
les arêtes libres des nervures (6) sont biseautées.

17. Turbine à gaz selon une des revendications 1 à 16,
**caractérisé en ce que**
les flancs des nervures (6) sont disposés parallèlement à une ligne partant de l'axe de la machine dans le sens radial.

18. Turbine à gaz selon une des revendications 1 à 16,
**caractérisé en ce que**
les flancs des nervures (6) sont orientés selon un angle différent de zéro par rapport à une ligne partant de l'axe de la machine dans le sens radial.

19. Turbine à gaz selon une des revendications 1 à 18,
**caractérisé en ce que**
les nervures (6) sont réalisées par enlèvement de matière.

20. Turbine à gaz selon une des revendications 1 à 18,
**caractérisé en ce que**
les nervures (6) sont réalisées par apport de matière.
